# EUROPÄISCHE PATENTANMELDUNG

(11) **EP 2 886 250 A1**
(43) Veröffentlichungstag der Anmeldung: **24.06.2015**
(21) Anmeldenummer: 13005991.8
(22) Anmeldetag: 20.12.2013
(51) Int. Cl.: B24C 1/00, C01B 31/22

(54) **Vorrichtung und Verfahren zur Erzeugung von Trockeneisschnee, für die Reinigung von Oberflächen**

(71) Anmelder: Linde Aktiengesellschaft, 80331 München (DE)
(72) Erfinder: Heninger, Rolf, 85635 Höhenkirchen-Siegertsbrunn (DE)
(74) Vertreter: Gellner, Bernd

(57) **Zusammenfassung**

Die Erfindung betrifft eine Vorrichtung (1) zur Erzeugung von Trockeneisschnee (T), mit: einem Rotationskörper (10), der um eine Rotationsachse (R) rotierbar in einem Gehäuse (20) gelagert ist, wobei der Rotationskörper (10) am Umfangs des Rotationskörpers (10) zumindest eine Expansionskammer (13) aufweist, , einer Zuleitung zum Einleiten von flüssigem Kohlendioxid in die mindestens eine Expansionskammer (13), einer Eintrittsöffnung (21) des Gehäuses (20) zum Einleiten eines gasförmigen Stoffstromes (D), insbesondere Druckluft, in die mindestens eine Expansionskammer (13), und einer Austrittsöffnung (22) des Gehäuses (20), zum Ausgeben des in der jeweiligen Expansionskammer (13) erzeugten Trockeneisschnees (T) aus dem Gehäuse. Erfindungsgemäß ist dabei vorgesehen, dass die Eintrittsöffnung (21) und die Austrittsöffnung (22) so angeordnet sind, dass die mindestens eine Expansionskammer (13) durch Rotieren des Rotationskörpers (10) um die Rotationsachse (R) gleichzeitig mit der Eintrittsöffnung (21) und der Austrittsöffnung (22) in Strömungsverbindung bringbar ist, so dass die mindestens eine Expansionskammer (13) von einem durch die Eintrittsöffnung (21) eingeleiteten gasförmigen Stoffstrom (D) zumindest abschnittsweise entlang der Rotationsachse (R) durchströmbar ist.

## Beschreibung

Die Erfindung betrifft eine Vorrichtung zur Erzeugung von Trockeneisschnee, insbesondere in Form von einzelnen Trockeneispaketen, sowie ein entsprechendes Verfahren, insbesondere zur Reinigung von Oberflächen.

Eine Möglichkeit, Oberflächen effizient zu reinigen, besteht darin, diese mit zuvor erzeugtem Trockeneis zu beschießen. Beim Trockeneis handelt es sich um in den festen Aggregatzustand überführtes und auf mindestens -78,5 °C gekühltes Kohlendioxid. Trockeneis geht unter Atmosphärendruck unmittelbar vom festen Aggregatzustand in den gasförmigen über, wobei keine Schmelzflüssigkeit entsteht. Dadurch kann auf besonders einfache Weise, nämlich mit normaler Druckluft, sowohl der Beschuss mit Trockeneis als auch die Absaugung und Abfuhr der Schmutzpartikel erfolgen.

Trockeneis liegt bei der Produktion in Form von Schnee vor. Die Erzeugung von CO₂-Schnee vor Ort mittels einer Düse aus flüssigem CO₂ und die direkte Bestrahlung einer Oberfläche mit diesem Schnee, ggf. mit Unterstützung von Druckluft, ist verfahrenstechnisch vergleichsweise einfach zu handhaben und leicht zu automatisieren.

Bei der Erzeugung und Abgabe derartiger Trockeneis-Pakete ergeben sich vor allem zwei Hauptaufgaben, nämlich die Anforderung, dass die Pakete hinreichend groß und kompakt sind, und dass die Vorrichtung zur Erzeugung dauerhaft arbeiten kann, d.h., sie darf nicht durch in der Vorrichtung verbleibendes Trockeneis verstopfen.

Diesbezüglich ist z.B. aus der EP 2 163 518 A1 eine Vorrichtung bekannt, die einen Rotationskörper aufweist, der um eine Rotationsachse rotierbar in einem Gehäuse gelagert ist, wobei der Rotationskörper Expansionskammern aufweist. Diese werden über einer Zuleitung mit flüssigem Kohlendioxid beladen, wobei in den Expansionskammern erzeugtes Trockeneis jeweils aus den Kammern ausgegeben und auf eine Oberfläche beschleunigt wird, um diese zu reinigen.

Dabei verläuft die Achse des Rotationskörpers quer zur Strömungsrichtung des Druckluftstroms, mit dem die erzeugten Trockeneispakete beschleunigt werden sollen. Diese Konfiguration baut darauf, dass das Trockeneis aus den einzelnen Expansionskammern des Rotationskörpers durch eine rotationsbedingte Fliehkraft herausgeschleudert wird, wobei zusätzlich Druckluft in die Zellen eingeblasen wird, um etwaige Trockeneisreste aus den Zellen zu entfernen. Es hat sich jedoch gezeigt, dass die erzeugte Fliehkraft bzw. das Anblasen der Expansionskammern mit Druckluft senkrecht zur Rotationsachse regelmäßig nicht ausreichen, um die Expansionskammern zuverlässig von Trockeneisresten zu befreien.

Hiervon ausgehend liegt der vorliegenden Erfindung daher die Aufgabe zugrunde, eine Vorrichtung und ein Verfahren der eingangs genannten Art zu schaffen, die bzw. das das vorgenannte Problem mindert.

Danach ist vorgesehen, dass die Eintrittsöffnung und die Austrittsöffnung so angeordnet sind, dass die mindestens eine Expansionskammer durch Rotieren des Rotationskörpers um die Rotationsachse gleichzeitig mit der Eintrittsöffnung und der Austrittsöffnung in Strömungsverbindung bringbar ist, wobei zumindest ein entlang der Rotationsachse erstreckter Abschnitt der mindestens einen Expansionskammer (vorzugsweise die gesamte Expansionskammer) entlang der Rotationsachse zwischen der Eintrittsöffnung und der Austrittsöffnung angeordnet ist, so dass die mindestens eine Expansionskammer von einem durch die Eintrittsöffnung eingeleiteten Stoffstrom zumindest abschnittsweise (bevorzugt vollständig) entlang der Rotationsachse durchströmbar ist.

Entlang der Rotationsachse bedeutet vorliegend, dass sich z.B. die Expansionskammer parallel zur Rotationsachse erstreckt oder auch mit einer gewissen Neigung gegenüber der Rotationsachse (z.B. wenn der Rotationskörper/Nabenkörper kegelförmig oder kegelstumpfförmig ausgebildet ist, siehe unten). Vorzugsweise erstreckt sich die mindestens eine Expansionskammer entlang einer Erstreckungsrichtung, und zwar insbesondere längserstreckt (d.h., die Ausdehnung der mindestens einen Expansionskammer bzw. aller vorhandenen Expansionskammern ist in der Erstreckungsrichtung größer als quer zur Erstreckungsrichtung), wobei die Erstreckungsrichtung parallel zur Rotationsachse verläuft oder mit einer gewissen Neigung gegenüber der Rotationsachse (vorzugsweise unter Einschluss eines Winkels mit der Rotationsachse, der zumindest spitz ist, bevorzugt kleiner gleich 70°, 60°, 50° oder 45°).

Die jeweilige Expansionskammer weist vorzugsweise einen ersten Endabschnitt auf, der entlang der Erstreckungsrichtung der jeweiligen Expansionskammer über einen mittleren Abschnitt mit einem zweiten Endabschnitt der jeweiligen Expansionskammer verbunden ist, wobei sich die beiden Endabschnitte entlang der Erstreckungsrichtung einander gegenüberliegen. Die Vorrichtung ist bevorzugt so ausgebildet, dass die jeweilige Expansionskammer durch Rotieren des Rotationskörpers mit ihrem ersten Endabschnitt in Strömungsverbindung mit der Eintrittsöffnung und mit dem zweiten Endabschnitt in Strömungsverbindung mit der Austrittsöffnung bringbar ist. Somit kann die jeweilige Expansionskammer zuverlässig mit dem gasförmigen Stoffstrom durchströmt und dabei ausgeräumt werden.

Des Weiteren kann die mindestens eine Eintrittsöffnung an einer ersten Seite (z.B. einer Hinterseite) des Rotationskörpers angeordnet sein, die sich z.B. quer zur Rotationsachse erstreckt, wobei die Austrittsöffnung an einer zweiten Seite (z.B. einer Vorderseite) des Rotationskörpers angeordnet sein kann, die der ersten Seite entlang der Rotationsachse gegenüberliegt. Bei der zweiten Seite kann es sich auch um eine entlang des Umfangs umlaufende Seite des Rotationskörpers handeln, wenn diese eine Neigung gegenüber der ersten Seite aufweist.

Aufgrund der erfindungsgemäßen Durchströmung der mindestens einen Expansionskammer entlang der Rotationsachse kann ein über die Eintrittsöffnung in die mindestens eine Expansionskammer eingeleiteter gasförmiger Stoffstrom den in der jeweiligen Expansionskammer erzeugten Trockeneisschnee im Wesentlichen restlos mitnehmen und durch die Austrittsöffnung aus dem Gehäuse ausgeben.

Bevorzugt ist vorgesehen, dass die Vorrichtung mehrere voneinander abgeteilte Expansionskammern aufweist, die sich jeweils bevorzugt durchgängig entlang der Rotationsachse von der Hinterseite des Rotationskörpers zur Vorderseite des Rotationskörpers erstrecken. Die Abteilung der Expansionskammern (z.B. durch von einem Nabenkörper des Rotationskörpers abstehende Flügel) kann massiv, also gasundurchlässig gestaltet werden, sie kann aber auch aus einem gasdurchlässigen Material oder aus einem massiven Material mit darin eingebrachten und für Gas durchlässigen Öffnungen oder Poren versehen werden. In einer besonderen Ausführungsform werden diese Öffnungen in Form von feinen Schlitzen im Sinne eines Kamms eingebracht.

Weiterhin ist vorzugsweise vorgesehen, dass die Eintrittsöffnung und die Austrittsöffnung so angeordnet sind, dass die mindestens eine bzw. jede Expansionskammer einmal pro Umlauf des Rotationskörpers um die Rotationsachse gleichzeitig mit der Eintrittsöffnung und der Austrittsöffnung in Strömungsverbindung steht.

Weiterhin ist bevorzugt vorgesehen, dass der Durchmesser des Rotationskörpers senkrecht zur Rotationsachse im Bereich von 20mm bis 100 mm liegt.

Gemäß einer bevorzugten Ausführungsform der Erfindung weist die Vorrichtung einen mit der Eintrittsöffnung in Strömungsverbindung stehenden Kanal zum Zuführen des gasförmigen Stoffstromes auf, wobei sich zumindest ein die Eintrittsöffnung aufweisender Abschnitt des Kanals oder der gesamte Kanal entlang der Rotationsachse erstreckt, insbesondere parallel zur Rotationsachse.

Weiterhin ist gemäß einer bevorzugten Ausführungsform vorgesehen, dass sich der Rotationskörper und/oder die mindestens eine Expansionskammer bzw. die mehreren Expansionskammern entlang der Rotationsachse, insbesondere in Strömungsrichtung des gasförmigen Stoffstroms, verjüngen, wobei insbesondere der Rotationskörper kegelförmig ausgebildet ist. Alternativ hierzu kann der Rotationskörper zylinderförmig ausgebildet sein. Eine Verjüngung kann auch dadurch erreicht werden, dass der Nabenkörper des Rotationskörpers kegel- oder kegelstumpfförmig ausgebildet ist, mit einem Durchmesser, der in der Strömungsrichtung des gasförmigen Stoffstroms, also in Richtung auf die Austrittsöffnung, ansteigt, wohingegen der Rotationskörper selbst, was seine Einhüllende anbelangt, zylinderförmig ausgebildet sein kann.

Zum Beschleunigen der Trockeneisschnee-Pakete weist die Vorrichtung vorzugsweise eine Lavaldüse auf. Hierbei kann die Austrittsöffnung in Strömungsverbindung mit der Lavaldüse stehen. Alternativ hierzu kann die Lavaldüse zumindest abschnittsweise durch die jeweils mit der Austrittsöffnung in Strömungsverbindung stehende Expansionskammer gebildet sein und einen sich an die mindestens eine Austrittsöffnung anschließenden Düsenabschnitt aufweisen, der sich im Querschnitt wieder aufweitet. Die Austrittsöffnung des Gehäuses sitzt dann in etwa am Hals der Düse.

Gemäß einer weiteren bevorzugten Ausführungsform der Erfindung ist vorgesehen, dass der Kanal von einem weiteren, insbesondere entlang der Rotationsachse erstreckten Kanal der Vorrichtung abzweigt, der insbesondere parallel zur Rotationsachse bzw. parallel zu dem einen Kanal verläuft, wobei die Austrittsöffnung in den weiteren Kanal mündet, und wobei der weitere Kanal in jene Lavaldüse mündet.

Zum Antreiben des Rotationskörpers kann die Vorrichtung einen Motor aufweisen, der z.B. als Druckluftmotor ausgebildet sein kann. Der Druckluftmotor kann dabei über eine Untersetzung mit einer mit der Rotationsachse zusammenfallenden Antriebsachse des Rotationskörpers gekoppelt sein. Alternativ hierzu kann der Motor als ein Elektromotor ausgebildet sein, dessen Drehzahl z.B. über die Stromstärke der angelegten Versorgungsspannung steuerbar ist.

Gemäß einer weiteren bevorzugten Ausführungsform ist vorgesehen, dass die Vorrichtung dazu ausgebildet ist, durch jenen gasförmigen Stoffstrom angetrieben zu werden, der auch zum Beschleunigen des erzeugten Trockeneisschnees verwendet wird, wobei die Vorrichtung zum Antreiben des Rotationskörpers mit jenem Stoffstrom vorzugsweise eine Turbine aufweist, die mit der Antriebsachse des Rotationskörpers gekoppelt ist, wobei insbesondere die Turbine direkt oder über eine Untersetzung mit der Antriebsachse des Rotationskörpers gekoppelt sein kann.

Bevorzugt ist weiterhin vorgesehen, dass die mindestens eine Expansionskammer oder die mehreren Expansionskammern des Rotationskörpers durch Flügel begrenzt werden, die in radialer Richtung von einem Nabenkörper des Rotationskörpers abstehen, über den der Rotationskörper mit der Antriebsachse gekoppelt ist. Die Flügel weisen gegenüber der Rotationsachse bevorzugt eine Neigung auf, so dass insbesondere der Rotationskörper durch den gasförmigen Stoffstrom angetrieben wird oder der Motor der Vorrichtung durch den gasförmigen Stoffstrom unterstützt wird, wenn dieser die mindestens eine Expansionskammer oder eine der mehreren Expansionskammern entlang der Rotationsachse durchströmt.

Weiterhin ist bevorzugt vorgesehen, dass die Zuleitung für das flüssige CO₂ mit zumindest einer Einlassöffnung des Gehäuses in Strömungsverbindung steht, die so angeordnet ist, insbesondere an der ersten Seite bzw. Hinterseite des Rotationskörpers, dass die mindestens eine bzw. jede Expansionskammer durch Rotieren des Rotationskörpers um die Rotationsachse mit der mindestens einen Einlassöffnung in Strömungsverbindung bringbar ist, und zwar insbesondere einmal pro Umlauf des Rotationskörpers um die Rotationsachse, so dass flüssiges CO₂ in die jeweilige mit der mindestens einen Einlassöffnung in Strömungsverbindung stehende Expansionskammer einleitbar ist, wobei insbesondere die mindestens eine Einlassöffnung so angeordnet ist, dass in die jeweilige Expansionskammer eingeleitetes flüssiges CO₂ zum Erzeugen von Trockeneis zumindest über einen halben Umlauf, bevorzugt zumindest über drei Viertel eines Umlaufes des Rotationskörpers um die Rotationsachse in der jeweiligen Expansionskammer verbleiben kann, bevor es aus der Expansionskammer durch die Austrittsöffnung ausgegeben wird bzw. die jeweilige Expansionskammer in Strömungsverbindung mit der Austrittsöffnung gelangt.

Bevorzugt sind die CO₂-Zuleitung und die mindestens eine Einlassöffnung so konfiguriert, dass das flüssige CO₂ in einer Strömungsrichtung in die jeweilige mit der Einlassöffnung in Strömungsverbindung stehende Expansionskammer einleitbar ist, wobei insbesondere die Strömungsrichtung entlang der Rotationsachse verläuft, insbesondere parallel zur Rotationsachse, oder eine Komponente quer zur Rotationsachse aufweist (z.B. eine tangentiale Komponente bezüglich des Umfangs des Rotationskörpers), so dass insbesondere der Rotationskörper zusätzlich durch das expandierende CO₂ antreibbar ist.

Weiterhin wird das der Erfindung zugrunde liegende Problem durch ein Verfahren mit den Merkmalen des Anspruchs 15 gelöst.

Danach weist das erfindungsgemäße Verfahren die Merkmale auf, wonach flüssiges Kohlendioxid in zumindest eine (oder mehrere) Expansionskammer eines Rotationskörpers eingeleitet und dabei expandiert wird, so dass in der mindestens einen Rotationskammer Trockeneisschnee, insbesondere in Form eines Trockeneisschnee-Paketes, erzeugt wird, wobei der mindestens eine Rotationskörper um eine Rotationsachse rotiert wird, und wobei die mindestens eine Expansionskammer am Umfang des Rotationskörpers angeordnet ist und sich durchgängig entlang der Rotationsachse erstreckt, und wobei in die mindestens eine Rotationskammer ein gasförmiger Stoffstrom eingeleitet wird, insbesondere in Form von Druckluft, so dass der Stoffstrom die mindestens eine Expansionskammer zumindest abschnittsweise, bevorzugt vollständig, entlang der Rotationsachse durchströmt und dabei der in der mindestens einen Expansionskammer erzeugte Trockeneisschnee mitgenommen und aus der mindestens einen Expansionskammer entlang der Rotationsachse ausgestoßen wird (z.B. auf eine zu reinigende Oberfläche). Es können natürlich auch mehrere Expansionskammer verwendet werden (siehe z.B. oben).

Vorzugsweise wird das flüssiges Kohlendioxid (insbesondere nacheinander) in die mindestens eine oder die mehreren, voneinander abgeteilten Expansionskammern des Rotationskörpers eingeleitet und dort expandiert, so dass in der jeweiligen Expansionskammer ein Trockeneisschnee-Paket entsteht, wobei jene Expansionskammern sich jeweils durchgängig entlang der Rotationsachse von der ersten Seite bzw. Hinterseite des Rotationskörpers zur zweiten Seite bzw. Vorderseite des Rotationskörpers erstrecken.

Vorzugsweise wird weiterhin in jede (insbesondere mit Trockeneisschnee beladene) Expansionskammer einmal pro Umlauf des Rotationskörpers um die Rotationsachse ein gasförmiger Stoffstrom eingeleitet, so dass der Stoffstrom die mindestens eine Expansionskammer zumindest abschnittsweise, bevorzugt vollständig, entlang der Rotationsachse durchströmt und dabei der in der jeweiligen Expansionskammer erzeugte Trockeneisschnee mitgenommen und entlang der Rotationsachse aus der jeweiligen Expansionskammer ausgestoßen wird

Bevorzugt wird der paketweise erzeugte Trockeneisschnee über eine Lavaldüse aus der jeweiligen Expansionskammer ausgegeben.

Gemäß einer weiteren Variante des erfindungsgemäßen Verfahrens wird der gasförmige Stoffstrom in einen ersten und einen zweiten Teilstrom aufgeteilt, wobei der erste Teilstrom durch die jeweilige Expansionskammer entlang der Rotationsachse geleitet wird, um dort erzeugten Trockeneisschnee aus der jeweiligen Expansionskammer entlang der Rotationsachse auszustoßen, und wobei der zweite Teilstrom entlang der Rotationsachse an dem Rotationskörper vorbeigeführt wird, und wobei aus der jeweiligen Expansionskammer entlang der Rotationsachse ausgestoßener Trockeneisschnee zusammen mit dem ersten Teilstrom stromab der jeweiligen Expansionskammer mit dem zweiten Teilstrom vereinigt wird und durch die Lavaldüse ausgegeben wird.

Bevorzugt wird der Rotationskörper mit einem Motor (siehe oben) und/oder mittels des gasförmigen Stoffstroms angetrieben. Vorzugsweise erhält der Rotationskörper bei dem erfindungsgemäßen Verfahren eine Rotationsgeschwindigkeit im Bereich von 20 bis 200 Umdrehungen pro Minute, bevorzugt 40 bis 100 Umdrehungen pro Minute.

Weiterhin werden bevorzugt die Expansionskammern pro Umlauf mit flüssigem CO₂ im Bereich von 0,05 bis 1,0 g/cm³, bevorzugt 0,1 bis 0,7 g/cm³, besonders bevorzugt 0,2 bis 0,4 g/cm³ beladen.

Das flüssige CO₂ wird bevorzugt so in die jeweilige Expansionskammer eingeleitet, dass darin entstehender Trockeneisschnee erst nach zumindest einem halben Umlauf, bevorzugt erst nach drei Viertel eines Umlaufs der jeweiligen Expansionskammer um die Rotationsachse mittels des gasförmigen Stoffstroms ausgegeben wird.

Flüssiges Kohlendioxid kann auch über mehrere Einspeisepunkte (z.B. Einlassöffnungen, siehe oben) insbesondere gleichzeitig in verschiedene Expansionskammern eingeleitet und expandiert werden.

Des Weiteren kann das flüssige Kohlendioxid ferner so in die jeweilige Expansionskammer eingeleitet werden, dass der Rotationskörper in seiner Rotation unterstützt bzw. zusätzlich angetrieben wird (siehe oben).

Besonders bevorzugt ist vorgesehen, dass der gasförmige Stoffstrom bei dem erfindungsgemäßen Verfahren Druckluft ist.

Weitere Merkmale und Vorteile der Erfindung sollen durch die Beschreibung von Ausführungsbeispielen anhand der Figuren erläutert werden. Es zeigen:
- Fig. 1: eine schematische Schnittansicht einer erfindungsgemäße Vorrichtung zur Erzeugung und zur Ausgabe von Trockeneisschnee-Paketen;
- Fig. 2: eine schematische Schnittansicht entlang der Linie II-II der Figur 1:
- Fig. 3: eine schematische Schnittansicht einer Abwandlung der in der Fig. 1 gezeigten erfindungsgemäßen Vorrichtung, wobei nur ein Teil der Druckluft durch die Expansionskammern geleitet wird;
- Fig. 4: eine schematische Schnittansicht einer weiteren erfindungsgemäßen Vorrichtung, die mittels eines Druckluftmotors angetrieben wird;
- Fig. 5: eine schematische Schnittansicht einer weiteren erfindungsgemäßen Vorrichtung, bei der ein Abschnitt einer Lavaldüse in den Rotationskörper integriert ist; und
- Fig. 6: eine schematische Schnittsansicht einer weiteren erfindungsgemäßen Vorrichtung mit einem kegelstumpfförmigen Rotationskörper.

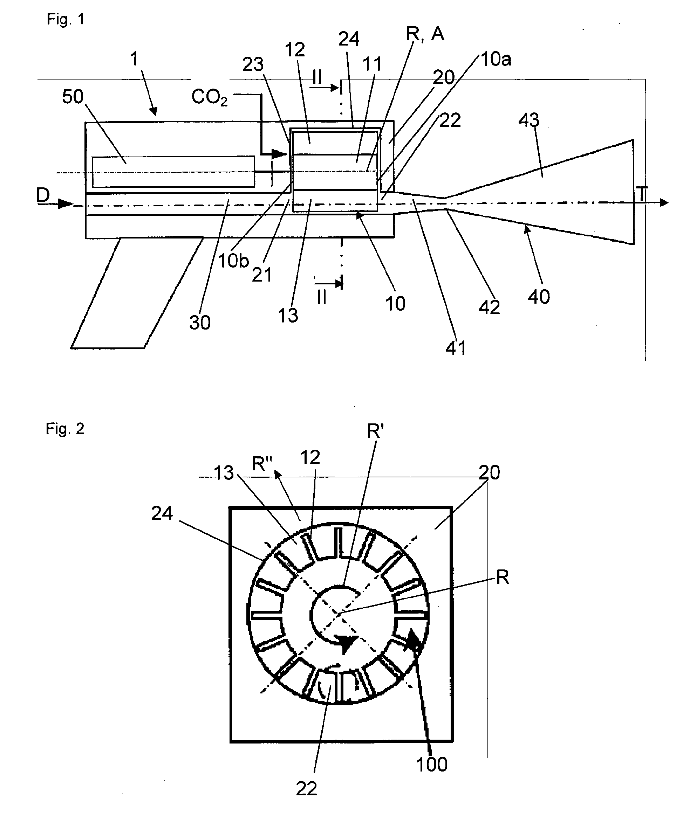

Die Figur 1 zeigt im Zusammenhang mit der Figur 1 eine erfindungsgemäße Vorrichtung 1 zum Erzeugen und Ausgeben von Trockeneisschnee-Paketen.

Die Vorrichtung 1 weist ein Gehäuse 20 auf, in dem ein Rotationskörper 10 um eine Rotationsachse R rotierbar gelagert ist, wobei der Rotationskörper 10 entlang eines die Rotationsachse R umlaufenden Umfangs des Rotationskörpers 10 eine Mehrzahl an Expansionskammern 13 aufweist, die sich jeweils durchgängig entlang der Rotationsachse R von einer quer zur Rotationsachse R erstreckten ersten Seite bzw. Hinterseite 10b des Rotationskörpers 10 zu einer der ersten Seite/Hinterseite 10b abgewandten zweiten Seite bzw. Vorderseite 10a des Rotationskörpers 10 erstrecken.

Der Rotationskörper 10 weist eine Mehrzahl an Flügeln 12 auf, die in radialer Richtung R" von einem Nabenkörper 11 des Rotationskörpers 10 abstehen, wobei je zwei benachbarte, einander gegenüberliegende Flügel 12 des Rotationskörpers 10 zusammen mit einer umlaufenden Wandung 24 des Gehäuses 20 eine Expansionskammer 13 der Vorrichtung 1 bilden, in die flüssiges Kohlendioxid einleitbar ist, so dass das flüssige Kohlendioxid durch Expansion in der jeweiligen Expansionskammer 13 in ein Trockeneisschnee-Paket T umgewandelt wird.

Um in der jeweiligen Expansionskammer 13 erzeugten Trockeneisschnee T aus dieser auszustoßen, weist die Vorrichtung 1 gemäß den in den Figuren 1, 4, 5 und 6 gezeigten Ausführungsformen einen entlang der Rotationsachse R erstreckten Kanal 30 auf, der in eine Eintrittsöffnung 21 des Gehäuses 20 mündet, durch die hindurch ein gasförmiger Stoffstrom D, bevorzugt in Form von Druckluft D, in die jeweilige Expansionskammer 13 des Rotationskörpers 10 eingeleitet werden kann, wenn diese beim Rotieren des Rotationskörpers 10 um die Rotationsachse R in Strömungsverbindung mit der Eintrittsöffnung 21 des Gehäuses 20 gelangt. Die Druckluft D durchströmt dann die jeweilige Expansionskammer 13 entlang der Rotationsachse R vollständig oder fast vollständig, reißt dabei das in der jeweiligen Expansionskammer 13 befindliche Trockeneisschnee-Paket T mit und befördert dieses durch eine Austrittsöffnung 22 des Gehäuses 20 aus der Vorrichtung 1 heraus. Aufgrund der Mehrzahl an Expansionskammern 13 des rotierenden Rotationskörpers 10 kann ein quasi kontinuierlicher Strom von Trockeneisschnee-Paketen T mit der Vorrichtung 1 abgegeben werden und z.B. auf eine Oberfläche geschossen werden, um diese zu reinigen.

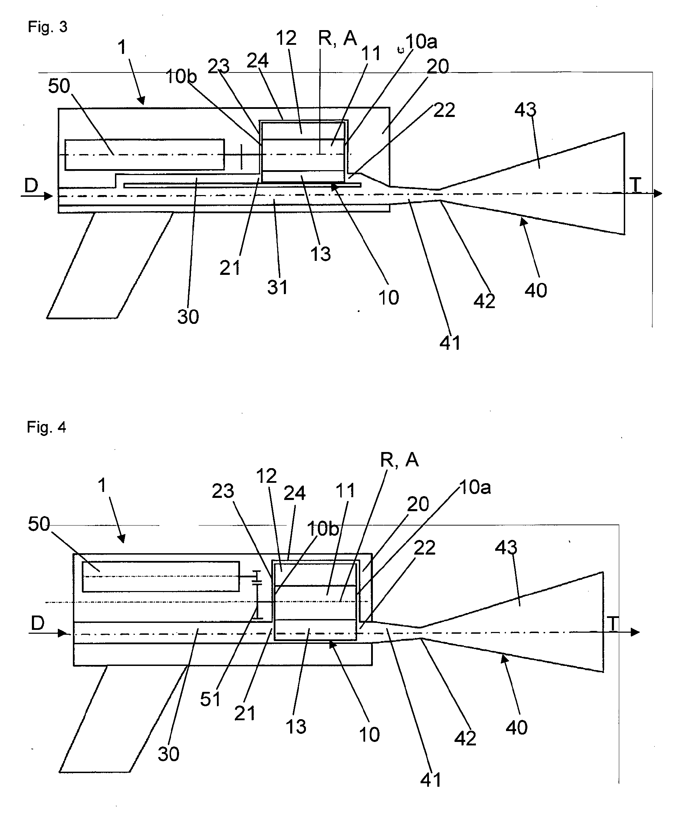

Gemäß den Figuren 1, 3 und 4 schließt sich an die besagte Austrittsöffnung 22 bevorzugt eine Lavaldüse 40 an, die einen sich verjüngenden ersten Düsenabschnitt 41 aufweist, der sich zu einem Düsenhals 42 hin im Querschnitt kontinuierlich verjüngt, wobei sich an den Düsenhals 42 ein zweiter Düsenabschnitt 43 mit anwachsendem Querschnitt anschließt. Die in den einzelnen Expansionskammern 13 erzeugten Trockeneisschnee-Chargen werden durch diese Lavaldüse 40 hindurch beschleunigt. Erfindungsgemäß kann dabei der gesamte Druckluftstrom D durch die jeweilige Expansionskammer 13 gegebenen werden und das darin befindliche Trockeneispaket T durch die Lavaldüse hindurch mitreißen. Es besteht jedoch gemäß Figur 3 auch die Möglichkeit, lediglich einen Teil der Druckluft D durch die jeweils mit der Eintrittsöffnung 21 fluchtende Expansionskammer 13 zu geben.

Hierzu weist die Vorrichtung 1 in der Ausführungsform gemäß Fig. 3 einen weiteren, entlang der Rotationsachse R erstreckten Kanal 31 auf, der in die besagte Lavaldüse 40 mündet, wobei von dem weiteren Kanal 31 stromauf des Rotationskörpers 10 der besagte eine Kanal 30 abzweigt und zur besagten Eintrittsöffnung 21 führt, so dass ein Teil der zur Verfügung stehenden Druckluft D aus dem weiteren Kanal 31 in den besagten einen Kanal 30 gelangt und von dort aus jeweils durch die momentan mit der Eintrittsöffnung 21 fluchtende Expansionskammer 13 gegeben werden kann. Die Austrittsöffnung 22 des Gehäuses 20 mündet in diesem Fall stromab des Rotationskörpers 10 in den weiteren Kanal 31, so dass die beiden Druckluftteilströme zusammen mit dem Trockeneis wieder vereinigt werden und über die besagte Lavaldüse 40 aus der Vorrichtung 1 ausgegeben werden können.

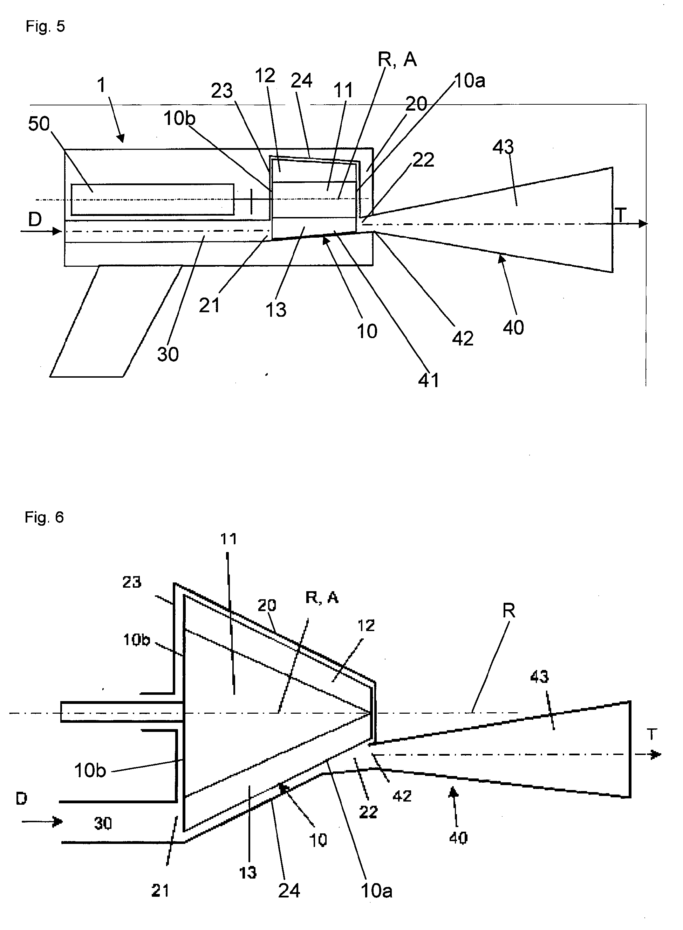

Weiterhin kann gemäß dem in der Fig. 5 gezeigten Ausführungsbeispiel Rotationkörper 10 entlang der Rotationsachse R, und zwar in Strömungsrichtung des Trockeneisschnees bzw. des Druckluftstromes D, kegelartig verjüngt ausgebildet sein, so dass die einzelnen Expansionskammern 10 sich entlang der besagten Strömungsrichtung ebenfalls kegelartig verjüngen (der Nabenkörper 11 ist hierbei zylindrisch ausgebildet), was den Vorteil mit sich bringt, dass nun der erste Düsenabschnitt 41 der zuvor beschriebenen Lavaldüse 40 (ggf. bis zum Düsenhals 42 hin) durch die jeweilige mit dem Kanal 30 kommunizierende Expansionskammer 13 gebildet wird, was eine entlang der Rotationsachse R verkürzten Ausbildung der erfindungsgemäßen Vorrichtung 1 erlaubt. Gleiches kann bei der Ausführungsform gemäß Fig. 6 realisiert werden.

Alternativ kann der Rotationskörper 10 am äußeren Umfang zylindrisch, der Nabenkörper 11 dagegen kegelig mit in Richtung 22 steigendem Durchmesser ausgeführt werden, was ebenso zu einer Verjüngung der Expansionskammer 10 führt.

Fig. 6 zeigt eine weitere Ausführungsform der Erfindung, bei der der Nabenkörper 11 kegelförmig (oder alternativ kegelstumpfförmig) ausgebildet ist, wobei die Flügel 12 derart vom Nabenkörper 11 abstehen, dass der gesamte Rotationskörper 10 die Form eines Kegelstumpfs annimmt. Dabei verjüngt sich der Rotationskörper 10 bzw. der Nabenkörper 11 im Wesentlichen in der Strömungsrichtung des gasförmigen Stoffstroms bzw. der Druckluft D. Aufgrund der ausgeprägten Verjüngung des Rotationskörpers 10 ist nun die Austrittsöffnung 22 an einer umlaufenden zweiten Seite des Rotationskörpers 10 bzw. an der umlaufenden Wandung 24 des Gehäuses 20 angeordnet, die einer ersten Seite bzw. Hinterseite 10b des Rotationskörpers 10 entlang der Rotationsachse R gegenüberliegt. Der gasförmige Stoffstrom D kann daher einen Großteil der jeweiligen Expansionskammer 13 von der Eintrittsöffnung 21 bis zur Austrittsöffnung 22 entlang der Rotationsachse R durchströmen und dabei den in der jeweiligen Expansionskammer 13 befindlichen Trockeneisschnee T mitnehmen und über die Lavaldüse 40 beschleunigen.

Gemäß Fig. 2 wird das flüssige Kohlendioxid grundsätzlich bevorzugt in axialer Richtung so über eine Einlassöffnung 23 in die daran vorbeirotierenden Expansionskammern 13 eingegeben, dass das flüssige Kohlendioxid bzw. der daraus entstehende Trockeneisschnee T fast einen vollen Umlauf des Rotationskörpers 10 mitmacht, bevor er aus der Austrittsöffnung 21 durch den Druckluftstrom D ausgestoßen wird. Vorzugsweise handelt es sich hierbei um zumindest einen halben Umlauf der Rotationskammer 10, bevorzugt um drei Viertel eines Umlaufes der Rotationskammer 10.

Es besteht weiterhin auch die Möglichkeit, das flüssige Kohlendioxid mit einer tangentialen Komponente bezüglich des Umfangs des Rotationskörpers 10 in den Rotationskörper 10 einzuleiten, so dass der Impuls des flüssigen Kohlendioxids genutzt werden kann, um den Rotationskörper 10 zusätzlich anzutreiben bzw. eine Rotation des Rotationskörpers 10 um die Rotationsachse R zu unterstützen.

Es hat sich in Versuchen gezeigt, dass Trockeneisschnee-Pakete T mit einer für die Reinigung einer Oberfläche ausreichenden Größe regelmäßig nur bei geringen Drehzahlen erzeugt werden. Diese liegen bevorzugt zwischen 20 und 200 Umdrehungen pro Minute, besonders bevorzugt zwischen 40 und 100 Umdrehungen pro Minute. Noch geringere Drehzahlen führen in der Regel zu einer ungleichmäßigen Reinigung der Oberfläche. Höhere Drehzahlen führen dazu, dass - bei gleichem CO₂-Vebrauch - pro Expansionskammer 13 weniger CO₂ eingespeist wird. Die Flügel 12 des Rotationskörpers 10 schieben dann auch weniger Schnee vor sich her und verdichten ihn unzureichend. Der Effekt ist zwar ein sehr gleichmäßiger Partikelstrom, der jedoch keine wesentliche Verbesserung der Reinigungswirkung gegenüber CO₂-Schneedüsen ohne Rotationskörper 10 bedeutet. Man könnte durch eine Erhöhung der CO₂-Einspeisung die Beladung pro Expansionskammer 10 und die Verdichtung vergrößern, was jedoch zu Lasten der Wirtschaftlichkeit geht. Außerdem steigt die Gefahr des Blockierens des Rotationskörpers 10 durch zu hohe Schneeproduktion. Beste Reinigungsergebnisse werden erfahrungsgemäß bei einer Beladung der Expansionskammern mit flüssigem CO₂ im Bereich von 0,05 bis 1,0 g/cm³, bevorzugt 0,1 bis 0,7 g/cm³, besonders bevorzugt 0,2 bis 0,4 g/cm³ erzielt.

Der bevorzugte äußere Durchmesser des Rotationskörpers 10 liegt bei 20 bis 100 mm. Der Antrieb des Rotationskörpers 10 kann z. B. über einen Druckluftmotor 50 erfolgen, da dieser ein günstiges Verhältnis von Baugröße zu Drehmoment aufweist. Handelsübliche Druckluftmotoren 50 weisen in der Regel nominale Drehzahlen von über 200 Umdrehungen pro Minute auf, die jedoch z.B. über eine Übertragung in Form einer Untersetzung (vgl. Fig. 4) reduzierbar sind, wobei hierdurch gleichzeitig das Drehmoment erhöht werden kann, was die Sicherheit gegenüber Blockaden durch hohe Bremsmomente erhöht.

Alternativ kann ein Elektromotor 50 verwendet werden (vgl. Fig. 1, 3 und 5), dessen Drehzahl etwa über einen Drehzahlsensor überwacht und über die Stromstärke gesteuert werden kann. Es ist weiterhin denkbar, den Rotationskörper 10 ähnlich einer Turbine von dem zur Beschleunigung verwendeten Druckluftstrom D antreiben zu lassen. Dabei treibt der Druckluftstorm D oder ein Teil davon eine Turbine an, die den Rotationskörper 10 direkt oder über eine Untersetzung antreibt. Ebenso kann der Rotationskörper 10 selbst durch eine Schrägstellung der Flügel 12 als Turbine fungieren und durch den Druckluftstrom D angetrieben werden. Der Vorteil ist, dass hierdurch ggf. auf einen zusätzlichen Motor 50 verzichtet werden könnte, was Gewichts- und Kostenvorteile bringt.

Es ist auch möglich, trotz Verwendung eines Motors 50, die Flügel 12 des Rotationskörpers 10 gegenüber der Rotationsachse R leicht schräg zu stellen, um auf diese Weise entweder den Strömungswiderstand im Druckluftstrom D zu minimieren oder - im Gegenteil - den Motor 50 durch die Erzeugung eines zusätzlichen Drehmoments zu unterstützen.

Die vorliegende Erfindung ermöglicht mit Vorteil das Reinigen von Oberflächen mit größeren Trockeneispaketen T, deren Größe durch die Expansionskammern 13 bzw. deren Volumen begrenzt ist. Aufgrund der Größe der erzeugbaren Trockeneispakete T, die aus der CO₂-Flüssigphase erzeugt werden, ergibt sich ein vergleichsweise breiter Anwendungsbereich, wie z. B. die Reinigung von Förderbändern, Transportbehältern, Maschinen, Motoren, Züge usw.

**Bezugszeichen**

| | |
|---|---|
| 1 | Vorrichtung zur Erzeugung von Trockeneisschnee |
| 10 | Rotationskörper |
| 10a | Zweite Seite bzw. Vorderseite |
| 10b | Erste Seite bzw. Hinterseite |
| 11 | Nabenkörper |
| 12 | Flügel |
| 13 | Expansionskammer |
| 20 | Gehäuse |
| 21 | Eintrittsöffnung |
| 22 | Austrittsöffnung |
| 23 | Einlassöffnung |
| 24 | Umlaufende Wandung |
| 30 | Kanal |
| 31 | Weiterer Kanal |
| 40 | Lavaldüse |
| 41 | Erster Düsenabschnitt |
| 42 | Düsenhals |
| 43 | Zweiter Düsenabschnitt |
| 50 | Motor |
| 51 | Übertragung bzw. Untersetzung |
| A | Antriebsachse |
| R | Rotationsachse |
| R' | Rotationsrichtung |
| R" | Radiale Richtung |
| D | Gasförmiger Stoffstrom (z.B. Druckluft) |
| T | Trockeneisschnee bzw. Trockeneisschneepakete |

## Patentansprüche

1. Vorrichtung zur Erzeugung von Trockeneisschnee, mit:
- einem Rotationskörper (10), der um eine Rotationsachse (R) rotierbar in einem Gehäuse (20) gelagert ist, wobei der Rotationskörper (10) am Umfang des Rotationskörpers (10) zumindest eine Expansionskammer (13) aufweist,
- einer Zuleitung zum Einleiten von flüssigem Kohlendioxid in die mindestens eine Expansionskammer (13),
- einer Eintrittsöffnung (21) des Gehäuses (20) zum Einleiten eines gasförmigen Stoffstromes (D), insbesondere Druckluft, in die mindestens eine Expansionskammer (13), und
- einer Austrittsöffnung (22) des Gehäuses (20), zum Ausgeben des in der mindestens einen Expansionskammer (13) erzeugten Trockeneisschnees (T) aus dem Gehäuse (20),
**dadurch gekennzeichnet,**
**dass** sich die mindestens eine Expansionskammer (13) entlang der Rotationsachse (R) erstreckt, und dass die Eintrittsöffnung (21) und die Austrittsöffnung (22) so angeordnet sind, dass die mindestens eine Expansionskammer (13) durch Rotieren des Rotationskörpers (10) um die Rotationsachse (R) gleichzeitig mit der Eintrittsöffnung (21) und der Austrittsöffnung (22) in Strömungsverbindung bringbar ist, so dass die mindestens eine Expansionskammer (13) von einem durch die Eintrittsöffnung (21) eingeleiteten gasförmigen Stoffstrom (D) zumindest abschnittsweise entlang der Rotationsachse (R) durchströmbar ist.

2. Vorrichtung nach Anspruch 1, **dadurch gekennzeichnet, dass** die Vorrichtung (1) mehrere voneinander abgeteilte Expansionskammern (10) aufweist.

3. Vorrichtung nach einem der vorhergehenden Ansprüche, **dadurch gekennzeichnet, dass** die Eintrittsöffnung (21) und die Austrittsöffnung (22) so angeordnet sind, dass die mindestens eine Expansionskammer (13) oder jede Expansionskammer (10) einmal pro Umlauf des Rotationskörpers (10) um die Rotationsachse (R) gleichzeitig mit der Eintrittsöffnung (21) und der Austrittsöffnung (22) in Strömungsverbindung steht.

4. Vorrichtung nach einem der vorhergehenden Ansprüche, **dadurch gekennzeichnet, dass** die Vorrichtung (1) einen mit der Eintrittsöffnung (21) in Strömungsverbindung stehenden Kanal (30) zum Zuführen des gasförmigen Stoffstromes (D) aufweist, wobei sich zumindest ein die Eintrittsöffnung (21) aufweisender Abschnitt des Kanals (30) oder der gesamte Kanal (30) entlang der Rotationsachse (R) erstreckt, insbesondere parallel zur Rotationsachse (R).

5. Vorrichtung nach einem der vorhergehenden Ansprüche, **dadurch gekennzeichnet, dass** sich die mindestens eine Expansionskammer (13) oder die mehreren Expansionskammern (10) entlang der Rotationsachse (R), insbesondere zur Austrittsöffnung (22) hin, verjüngen, wobei insbesondere der Rotationskörper (10) oder ein Nabenkörper (11) des Rotationskörpers (10) kegelförmig oder kegelstumpfförmig ausgebildet ist.

6. Vorrichtung nach einem der vorhergehenden Ansprüche, **dadurch gekennzeichnet, dass** die Vorrichtung (1) zum Ausgeben des Trockeneisschnees (T) eine Lavaldüse (40) aufweist, wobei insbesondere die Lavaldüse (40) mit der Austrittsöffnung (22) in Strömungsverbindung steht oder wobei insbesondere die Lavaldüse (40) zumindest abschnittsweise durch die jeweils mit der Austrittsöffnung (21) in Strömungsverbindung stehende Expansionskammer (13, 41) und einen sich an die mindestens eine Austrittsöffnung (22) anschließenden Düsenabschnitt (43) gebildet wird.

7. Vorrichtung nach Anspruch 4 und 6, **dadurch gekennzeichnet, dass** der Kanal (30) von einem weiteren, insbesondere entlang der Rotationsachse (R) erstreckten Kanal (31) der Vorrichtung (1) abzweigt, wobei die Austrittsöffnung (21) in den weiteren Kanal (31) mündet, und wobei der weitere Kanal (31) in jene Lavaldüse (40) mündet.

8. Vorrichtung nach einem der vorhergehenden Ansprüche, **dadurch gekennzeichnet, dass** die Vorrichtung (1) einen Motor (50) zum Rotieren des Rotationskörpers (10) um die Rotationsachse (R) aufweist.

9. Vorrichtung nach Anspruch 8, **dadurch gekennzeichnet, dass** der Motor (50) als Druckluftmotor ausgebildet ist, der insbesondere über eine Untersetzung (51) mit einer Antriebsachse (A) des Rotationskörpers (10) gekoppelt ist.

10. Vorrichtung nach Anspruch 8, **dadurch gekennzeichnet, dass** der Motor (50) als ein Elektromotor ausgebildet ist.

11. Vorrichtung nach einem der Ansprüche 1 bis 7, **dadurch gekennzeichnet, dass** die Vorrichtung (1) dazu ausgebildet ist, durch jenen gasförmigen Stoffstrom (D) angetrieben zu werden, der auch zum Beschleunigen des erzeugten Trockeneisschnees (T) verwendet wird, wobei die Vorrichtung (1) zum Antreiben des Rotationskörpers (10) mit jenem Stoffstrom (D) eine Turbine aufweist, die mit einer Antriebsachse (A) des Rotationskörper (10) gekoppelt ist, wobei insbesondere die Turbine direkt oder über eine Untersetzung mit der Antriebsachse (A) des Rotationskörpers (10) gekoppelt ist.

12. Vorrichtung nach einem der Ansprüche 1 bis 11, **dadurch gekennzeichnet, dass** die mindestens eine Expansionskammer (13) oder die mehreren Expansionskammern (13) des Rotationskörpers (10) durch Flügel (12) begrenzt werden, die in radialer Richtung (R") von einem Nabenkörper (11) des Rotationskörpers (10) abstehen, wobei insbesondere die Flügel (12) gasdurchlässig oder gasundurchlässig ausgebildet sind, und wobei insbesondere die Flügel (12) gegenüber der Rotationsachse (R) eine Neigung aufweisen, so dass insbesondere der Rotationskörper (10) durch den gasförmigen Stoffstrom (D) antreibbar ist oder der Motor (50) der Vorrichtung (1) durch den gasförmigen Stoffstrom (D) unterstützbar ist, wenn dieser die mindestens eine Expansionskammer (13) oder eine der mehreren Expansionskammern (13) entlang der Rotationsachse (R) zumindest abschnittsweise durchströmt.

13. Vorrichtung nach einem der vorhergehenden Ansprüche, **dadurch gekennzeichnet, dass** die Zuleitung für das flüssige CO₂ mit zumindest einer Einlassöffnung (23) des Gehäuses (20) in Strömungsverbindung steht, die so angeordnet ist, dass die mindestens eine Expansionskammer (13) oder jede der Expansionskammern (13) durch Rotieren des Rotationskörpers (10) um die Rotationsachse (R) mit der mindestens einen Einlassöffnung (23) in Strömungsverbindung bringbar ist, und zwar insbesondere einmal pro Umlauf des Rotationskörpers (10) um die Rotationsachse (R), so dass flüssiges CO₂ in die jeweilige Expansionskammer (13) einleitbar ist, wobei insbesondere die mindestens eine Einlassöffnung (23) so angeordnet ist, dass in die jeweilige Expansionskammer (13) eingeleitetes CO₂ zum Erzeugen von Trockeneisschnee (T) zumindest über einen halben Umlauf, bevorzugt zumindest über drei Viertel eines Umlaufes des Rotationskörpers (10) in der jeweiligen Expansionskammer (13) verbleiben kann, bevor es aus der jeweiligen Expansionskammer (13) durch die Austrittsöffnung (22) ausgegeben wird.

14. Vorrichtung nach Anspruch 13, **dadurch gekennzeichnet, dass** die Zuleitung und die mindestens eine Einlassöffnung (23) so konfiguriert sind, dass das flüssige CO₂ in einer Strömungsrichtung in die jeweilige mit der Einlassöffnung (23) in Strömungsverbindung stehende Expansionskammer (13) einleitbar ist, wobei insbesondere die Strömungsrichtung entlang der Rotationsachse (R) verläuft, insbesondere parallel zur Rotationsachse, oder eine Komponente quer zur Rotationsachse (R) aufweist, so dass insbesondere der Rotationskörper (10) zusätzlich durch das flüssige CO₂ antreibbar ist.

15. Verfahren zum Erzeugen von Trockeneisschnee, insbesondere unter Verwendung einer Vorrichtung nach einem der vorhergehenden Ansprüche, bei dem flüssiges Kohlendioxid in zumindest eine Expansionskammer (13) eines Rotationskörpers (10) eingeleitet und dabei expandiert wird, so dass in der mindestens einen Rotationskammer (13) Trockeneisschnee (T) erzeugt wird, wobei der mindestens eine Rotationskörper (13) um eine Rotationsachse (R) rotiert wird, und wobei die mindestens eine Expansionskammer (13) am Umfang des Rotationskörpers (10) angeordnet ist und sich insbesondere durchgängig entlang der Rotationsachse (R) erstreckt, und wobei in die mindestens eine Rotationskammer (13) ein gasförmiger Stoffstrom (D), vorzugsweise in Form von Druckluft, eingeleitet wird, so dass der Stoffstrom (D) die mindestens eine Expansionskammer (13) entlang der Rotationsachse zumindest abschnittsweise durchströmt und dabei der in der mindestens einen Expansionskammer (13) erzeugte Trockeneisschnee (T) mitgenommen und aus der mindestens einen Expansionskammer (13) entlang der Rotationsachse (R) ausgestoßen wird, insbesondere auf eine zu reinigende Oberfläche.
